# EUROPÄISCHE PATENTANMELDUNG

(11) **EP 1 284 235 A1**
(43) Veröffentlichungstag der Anmeldung: **19.02.2003**
(21) Anmeldenummer: 02405608.7
(22) Anmeldetag: 16.07.2002
(51) Int. Cl.: C01B 3/38, B01J 19/24, B01J 19/26, H01M 8/06

(54) **Verfahren zum Reformieren von Brennstoffen, insbesondere Heizöl**

(30) Priorität: 15.08.2001 EP 01810784
(71) Anmelder: Sulzer Hexis AG, 8400 Winterthur (CH)
(72) Erfinder: Zähringer, Thomas, 8404 Wintherur (CH); Schuler, Alexander Dr., 8484 Weisslingen (CH)
(74) Vertreter: Sulzer Management AG

(57) **Zusammenfassung**

Das Verfahren zum Reformieren von Brennstoffen, insbesondere Heizöl (20') oder einem anderen flüssigen Brennstoff, wird unter Verwendung eines sauerstoffhaltigen Gases (5a, 5b, 21', 22') durchgeführt. Das Verfahren umfasst folgende Schritte:
- Bildung eines Brennstoff/Gas-Gemisches durch Dispergieren des Brennstoffs in einen Strahl des sauerstoffhaltigen Gases (21');
- zusätzlich ein Zumischen von Gas eines Rückführstroms (3b) und Verdampfung des dispergierten Brennstoffs;
- Erzeugung von Synthesegas aus dem Gasgemisch mittels partieller Oxidation sowie Reformierungsprozessen durch heterogene Katalyse;
- Verzweigung des erzeugten Synthesegases in einen Produktstrom (3a) und den Rückführstrom (3b) für eine Rezirkulation; und
- eine geregelte Entnahme (6) von Wärme aus dem Rückführstrom zur Einstellung einer vorgegebenen Temperatur eines Katalysatorträgers (10), auf dem die heterogene Katalyse stattfindet.

## Beschreibung

Die Erfindung betrifft ein Verfahren zum Reformieren von Brennstoffen, insbesondere Heizöl oder einem anderen flüssigen Brennstoff, vorzugsweise zwecks Gewinnung von elektrischer und thermischer Energie mittels Hochtemperatur-Brennstoffzellen. Die Erfindung bezieht sich auch auf Einrichtungen zum Durchführen des Verfahrens sowie auf eine Anlage mit Brennstoffzellen, in der das erfindungsgemässe Verfahren zur Anwendung kommt.

Die Reformierung von Kohlenwasserstoffen, die in Form von beispielsweise Brenngas oder verdampftem Heizöl vorliegen, lässt sich katalytisch bei rund 800°C unter Zumischen von dampfförmigem Wasser und einer Wärmezufuhr durchführen. Es entsteht bei der Reformierung Kohlenmonoxid und Wasserstoff, die als Edukte für elektrochemische Prozesse in Hochtemperatur-Brennstoffzellen verwendet werden können, beispielsweise in einer Batterie von Brennstoffzellen, wie sie aus der EP-A 0 780 917 (= P.6719) bekannt ist. Diese Batterie enthält einen Zellenblock mit Brennstoffzellen, der von einer wärmedämmenden Hülle umgeben ist. Ein Nachverbrennungsraum befindet sich zwischen Hülle und Zellenblock. Ein Reformer (auch als Prereformer bezeichnet), der sich nur für die Aufbereitung eines gasförmigen Brennstoffs eignet, ist in der Hülle angeordnet. Er ist mit einem Wärmetauscher verbunden, mittels dem ihm für die Reformierungsprozesse benötigte Wärme aus Abgasen zuführbar ist.

Wenn Luft oder ein anderes sauerstoffhaltiges Gas, das sich aus einem Inertanteil und einem aus molekularem Sauerstoff O₂ bestehenden Anteil zusammensetzt, den Kohlenwasserstoffen zugemischt wird, findet parallel zu den endothermen Reformierungsprozessen eine partielle Oxidation statt, die exotherm ist und bei der Wasser als ein Reaktionsprodukt entsteht. Das durch die partielle Oxidation gebildete Wasser dient als Edukt für die Reformierung. Eine Zumischung von Wasser ist somit nicht mehr oder nur noch teilweise erforderlich, was vorteilhaft ist, da Wasser wegen Anforderungen an dessen Reinheit teuer ist. Allerdings entsteht ein Problem, wenn die Reformierung im Zusammenspiel mit einer partiellen Oxidation durchgeführt wird, wie die folgenden Ausführungen zeigen:

Die Reformierungsprozesse werden durch eine heterogene Katalyse in einem einheitlich strukturierten Katalysator durchgeführt. Der Katalysator besteht aus einem Katalysatorträger, auf dessen Oberflächen das katalytisch wirksame Material, nämlich ein Platinmetall (insbesondere Platin, Rhodium oder Palladium), Nickel oder ein Gemisch solcher Metalle aufgebracht ist. Die simultan erfolgende Oxidation läuft viel schneller als die endotherme Reformierreaktion ab; sie erfolgt daher in einem Eingangsbereich des Katalysators, in dem sich aufgrund der Wärmeabgabe durch die Oxidation hohe Temperaturen ausbilden. Diese Temperaturen können eine Desaktivierung der katalytisch wirksamen Metalle, beispielsweise durch ein Abdampfen, und damit eine Schädigung des Katalysators zur Folge haben.

Aufgabe der Erfindung ist es, ein Verfahren zum Reformieren eines Brennstoffes, insbesondere Heizöl oder einem anderen flüssigen Brennstoff, zu schaffen, bei dem eine partielle Oxidation simultan zur Reformierung durchgeführt wird, aber eine schädigende Wirkung der exothermen Prozesse auf den Katalysator ausbleibt. Diese Aufgabe wird durch das im Anspruch 1 definierte Verfahren gelöst, indem mit der angegebenen Massnahme einer Rückführung von Synthesegas die Temperatur im Eingangsbereich des Katalysators so weit erniedrigt werden kann, dass thermische Schädigungen verhindert sind.

Das Verfahren zum Reformieren von Brennstoffen, insbesondere Heizöl oder einem anderen flüssigen Brennstoff, wird unter Verwendung eines sauerstoffhaltigen Gases durchgeführt. Das Verfahren umfasst folgende Schritte:
- Bildung eines Brennstoff/Gas-Gemisches durch Dispergieren des Brennstoffs in einen Strahl des sauerstoffhaltigen Gases;
- zusätzlich ein Zumischen von Gas eines Rückführstroms und Verdampfung des dispergierten Brennstoffs;
- Erzeugung von Synthesegas aus dem Gasgemisch mittels partieller Oxidation sowie Reformierungsprozessen durch heterogene Katalyse;
- Verzweigung des erzeugten Synthesegases in einen Produktstrom und den Rückführstrom für eine Rezirkulation; und
- eine geregelte Entnahme von Wärme aus dem Rückführstrom zur Einstellung einer vorgegebenen Temperatur eines Katalysatorträgers, auf dem die heterogene Katalyse stattfindet.

Die abhängigen Ansprüche 2 bis 5 betreffen vorteilhafte Ausführungsformen des erfindungsgemässen Verfahrens. Gegenstand der Ansprüche 6 bis 9 ist eine Einrichtung zum Durchführen des Verfahrens. Anspruch 10 bezieht sich auf eine Anlage mit einer Batterie von Hochtemperatur-Brennstoffzellen, die mit erfindungsgemäss aufbereitetem Heizöl betrieben wird.

Nachfolgend wird die Erfindung anhand der Zeichnungen erläutert. Es zeigen:
- Fig. 1: eine Einrichtung zum Durchführen des erfindungsgemässen Verfahrens,
- Fig. 2: ein Diagramm mit einem Temperaturprofil, das sich bei einer partiellen Oxidation und simultanen Reformierung in einem Katalysator ergibt,
- Fig. 3: eine Anlage mit einer Batterie von Hochtemperatur-Brennstoffzellen und einer erfindungsgemässen Einrichtung zum Reformieren von Heizöl,
- Fig. 4: eine besondere Zweistoffdüse und
- Fig. 5: eine zweite Ausführungsform der erfindungsgemässen Einrichtung.

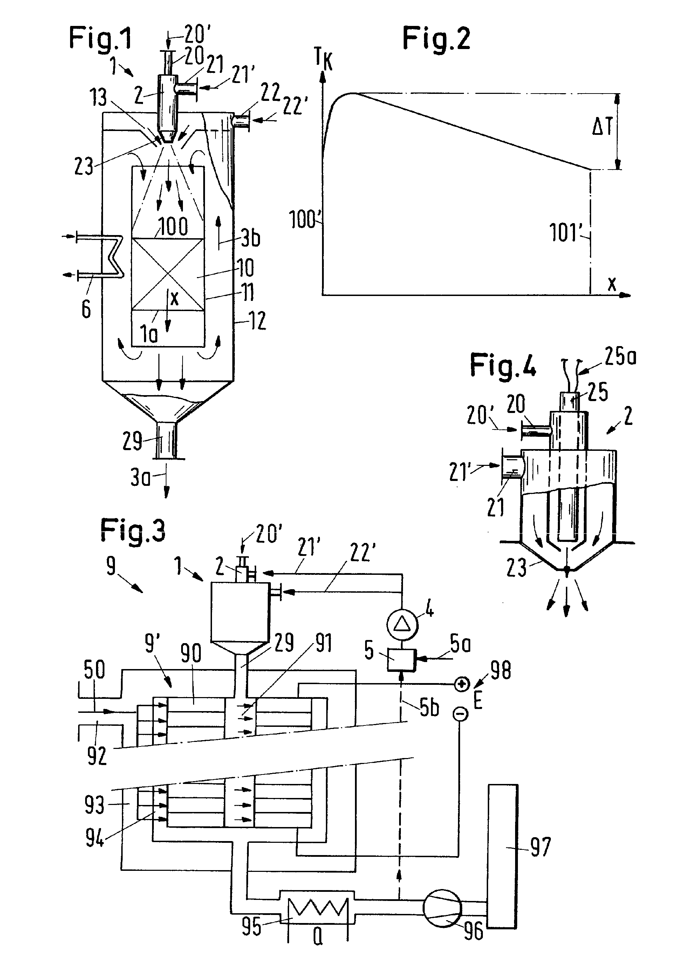

Das erfindungsgemässe Verfahren kann mit der in Fig. 1 dargestellten Einrichtung 1 durchführt werden. Mittels einer Zweistoffdüse 2, die eine zentrale Zuführung 20 für Heizöl 20', eine seitliche Zuführung 21 für ein sauerstoffhaltiges Gas 21' und eine Düsenspitze 23 umfasst, wird ein Heizöl/Gas-Gemisch in die Einrichtung 1 eingesprüht. Dabei wird ein weiterer Teilstrom 22' des sauerstoffhaltigen Gases über eine Zuführung 22 und eine ringförmige Düse 13 mit dem Heizöl/Gas-Gemisch vereinigt. (Das erfindungsgemässe Verfahren kann auch ohne diesen Teilstrom durchgeführt werden.) Am Ausgang der Düse 13 bewirkt der austretende Strahl einen Unterdruck, durch den Gas eines heissen Rückführstroms 3b angesaugt wird. Durch eine Vermischung dieses heissen Gases mit dem Strahl der Düse 13 wird dem dispergierten Heizöl, das kalt in die Zweistoffdüse 2 eingespeist werden kann, Wärme zugeführt, so dass das Heizöl verdampft wird. Eine Wärmeabstrahlung durch den heissen Katalysator 10 trägt zur Erwärmung des dispergierten Heizöls bei, so dass die für die Verdampfung benötigte Wärme nicht allein durch den Rückführstrom 3b geliefert werden muss.

Die Zweistoffdüse 2 ist in einem Abstand von dem Katalysator 10 entfernt angeordnet, wobei der Abstand zu einer Eintrittsfläche 100 so gross ist, dass sich für die Verdampfung des Heizöls eine genügend lange Verweilzeit vor dem Eintritt ergibt und das Gemisch über die ganze Eintrittsfläche 100 verteilt in den Katalysator 10 eintritt. Der Katalysator 10 befindet sich in einem ersten zylindrischen Rohr 11. Ein zweites zylindrisches Rohr 12 bildet Teil einer Aussenwand der Einrichtung 1. Das katalytisch erzeugte Synthesegas wird unterhalb einer Austrittsfläche 101 in einen Produktstrom 3a und den Rückführstrom 3b verzweigt. Der Produktstrom 3a verlässt die Einrichtung 1 durch ein Auslassrohr 29. Der Rückführstrom 3b wird, angetrieben durch ein Druckgefälle, das aufgrund des Unterdrucks bei der Düse 13 besteht, durch einen Rezirkulationsspalt, der ein Ringraum zwischen den zwei Rohren 11 und 12 ist, nach oben geführt. Mittels eines Wärmetauschers 6 wird Wärme aus dem Rückführstrom 3b entnommen. Mit einer geregelten Entnahme von Wärme lässt sich die Temperatur T_{K} des Katalysators 10 beeinflussen, so dass beispielsweise die mittlere Temperatur einen vorgegebenen Wert annimmt.

Die Temperatur T_{K} hat ein Profil, wie es qualitativ im Diagramm der Fig. 2 dargestellt ist. Die x-Achse, deren Richtung in Fig. 1 eingezeichnet ist, erstreckt sich in der Hauptströmungsrichtung des Katalysators 10. Die linke Linie 100' des Diagramms entspricht der Eintrittsfläche 100, die rechte Linie 101' der Austrittsfläche 101. Wie bereits erwähnt hat die Temperatur im Eingangsbereich aufgrund der exothermen Prozesse ein Maximum. Die endothermen Prozesse der Reformierung bewirken ein graduelles Abnehmen der Temperatur nach dem Maximum. Die angegebene Temperaturspanne ΔT muss innerhalb einem Intervall liegen, dessen Grenzen durch eine erforderliche Minimaltemperatur von rund 700°C und eine maximal zulässige Temperatur von rund 1000°C gegeben sind. Diese Bedingung kann ohne die erfindungsgemässe Massnahme nicht erfüllt werden.

Dank des Rückführstroms 3b wird die Temperaturspanne ΔT des Temperaturprofils kleiner; und die mittlere Temperatur kann tiefer eingestellt werden. Die Verkleinerung von ΔT ergibt sich aus zwei Gründen: a) Der Partialdruck des Heizöldampfs wird durch das rückgeführte Gas herabgesetzt (Erhöhung des Anteils an Inertgas). b) Mit dem Rückführstrom 3b wird bereits im Eingangsbereich des Katalysators Wasser (im Prozess entstandenes Wasser) für die Reformierungsprozesse zur Verfügung gestellt und damit eine Wärmesenke erzeugt. Diese beiden Gründe haben auch die vorteilhafte Wirkung, dass eine Russbildung im Katalysator 10 unterdrückt wird.

Die Packung soll im Hinblick auf die Rezirkulation eine Struktur aufweisen, die einen möglichst geringen Strömungswiderstand erzeugt. Vorteilhaft ist eine geordnete Packung, deren Struktur beispielsweise eine Wabenstruktur mit parallelen Strömungskanälen ist oder eine Struktur mit wellenförmigen Folien und sich offen kreuzenden Strömungskanälen ("Kreuzkanalstruktur"). Es ist auch eine retikulare Schaumstruktur oder eine Struktur eines dreidimensionalen Geflechts möglich.

Die in Fig. 3 dargestellte Anlage 9 umfasst eine Batterie 9' in Form eines Stapels von planaren, ringförmigen Hochtemperatur-Brennstoffzellen 90 und eine erfindungsgemässe Einrichtung 1 zum Reformieren von Heizöl. Ausser den Brennstoffzellen 90 sind folgende Komponenten zu sehen: eine Hülle 93, die einen nicht dargestellten inneren Aufbau aufweist, mittels dem während des Betriebs Umgebungsluft 50 (Einlass 92) vorgewärmt und gleichmässig verteilt dem Zellstapel zugeführt wird; einen Nachverbrennungsraum 94 zwischen Zellstapel 9' und Hülle 93, aus dem Abwärme über einen Wärmetauscher 95 (Abgabe von Heizwärme Q an beispielsweise einen Wasserkreislauf) abgeführt wird; einen Ventilator 96, mit dem das Abgas abgesaugt und in einen Kamin gefördert wird; Pole 98 zur Abgabe von elektrischer Energie E an einen Verbraucher.

Mit den beiden Teilströmen 21' und 22' wird das durch eine Pumpe 4 geförderte sauerstoffhaltige Gas in die Einrichtung 1 eingespeist. Als sauerstoffhaltiges Gas wird Umgebungsluft 5a und/oder Abgas 5b aus der Nachverbrennung der Brennstoffzellenbatterie 9' verwendet. In einer Mischeinrichtung 5 wird ein optimales Verhältnis von Umgebungsluft 5a und Abgas 5b hergestellt. Das Produktgas der Reformierung wird durch die Leitung 29 in einen zentralen Verteilkanal 91 der Batterie 9' eingespeist.

Fig. 4 zeigt eine besondere Zweistoffdüse 2. Diese enthält eine Heizpatrone 25 (elektrische Anschlüsse 25a), mit der sich das Heizöl 20' auf 400 - 420 °C vorwärmen lässt, um so die Verdampfung unterstützen oder durchführen zu können.

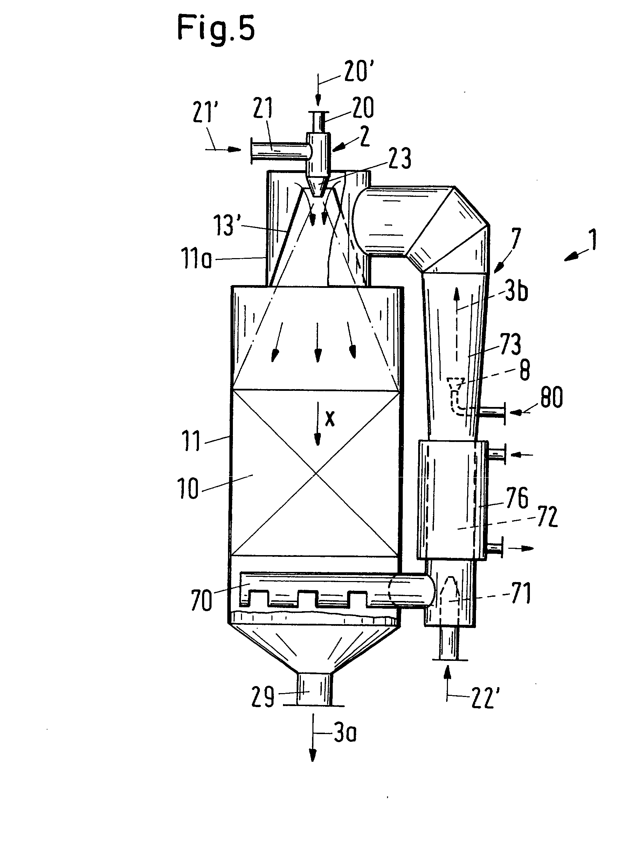

Eine zweite Ausführungsform der erfindungsgemässen Einrichtung 1 ist in Fig. 5 dargestellt. Für den Rückführstrom 3b ist ein zweites Rohr 7 an das erste, den Katalysator 10 enthaltende Rohr 11 angefügt, wobei das zweite Rohr 7 als ein Strahlverdichter ausgebildet ist. Der zweite Teilstrom 22' des sauerstoffhaltigen Gases wird als Treibmedium genutzt. Es wird mit einer Treibdüse 71 Synthesegas durch ein Rohr 70 angesaugt. Ein nachgeschaltetes Mischrohrstück 72, in dem eine Impulsübertragung vom Treibmedium auf das Synthesegas erfolgt, ist als ein Wärmetauscher 76 ausgebildet, der dem Wärmetauscher 6 im Ausführungsbeispiel der Fig. 1 entspricht. Im einem anschliessenden Diffusor 73 kann mit einer Düse 8 deionisiertes Wasser 80 in den Rückführstrom 3b eingesprüht werden, um dieses eingespeiste Wasser 80 als Reaktionskomponente der Reformierungsprozesse und für eine Kühlung des rückgeführten Synthesegases zu nutzen. Der mit dem Strahlverdichter 7 geförderte Rückführstrom 3b wird im oberen Teil der Einrichtung 1 zwischen einer Aussenwand 11a und einer kegelstumpfförmigen Wand 13' um die Zweistoffdüse 2 verteilt. Durch einen Ringspalt an der Düsenspitze 23 wird das Gas des Rückführstroms 3b mit dem aus der Düse 2 austretenden Heizöl/Gas-Gemisch vereinigt und dem Katalysator 10 zugeführt. Die Düse 2 kann auch von dem in Fig. 4 gezeigten Typ sein.

Für die vollständige Verdampfung des Heizöls muss das rückgeführte Gas so heiss sein, dass eine Temperatur von rund 250 - 300 °C erreicht wird. Wenn Gas mit einer Temperatur von 900 °C rezirkuliert wird, so muss das Verhältnis von Rückführstrom zu Produktstrom rund 1 : 4 betragen. Je höher das Rezirkulationsverhältnis gewählt wird, desto gleichmässiger ist das Temperaturprofil im Katalysator. Ein Verhältnis grösser als 1 ist aber aus wirtschaftlichen Gründen nicht sinnvoll, da das Antreiben der Rezirkulationsströmung wegen einem hohen Bedarf an Impulseintrag teuer wird.

Der für die Rezirkulation erforderliche Impuls kann auf verschiedene Arten mittels der Reaktionsluft bereitgestellt werden. Die Reaktionsluft kann gesamthaft über die Zweistoffdüse eingespeist werden, was eine feine Zerstäubung ergibt aber mit einem relativ grossen Energiebedarf verbunden ist. Die Reaktionsluft kann energiesparender als Primär- und Sekundärluft unterteilt eingespeist werden, die Primärluft in der Zweistoffdüse und die Sekundärluft beispielsweise in einem Strahlverdichter. Diese zweite Art ist allerdings apparativ aufwändiger.

Bei der Durchführung einer autothermen Reformierung, bei der neben Luft auch Wasser als Reaktionsmittel verwendet wird, kann das Wasser zur Regelung der Reaktionstemperatur genutzt werden; das Wasser kann dabei in den Rezirkulationsspalt eingedüst werden.

Das erfindungsgemässe Verfahren kann auch mit flüssigen Brennstoffen wie Methanol, Ethanol oder "Biodiesel" (pflanzliches Öl) durchgeführt werden. Auch gasförmige Brennstoffe (Erdgas, Flüssiggas, Biogas) können verwendet werden, wenn das erfindungsgemässe Verfahren etwas modifiziert wird (keine Verdampfung des Brennstoffs). Bei diesen Brennstoffen, die eine geringere adiabate Temperaturerhöhung als Heizöl aufweisen, kann der Umsatz durch eine Wärmezufuhr - beispielsweise in den Rezirkulationsspalt - verbessert werden.

## Patentansprüche

1. Verfahren zum Reformieren von Brennstoffen, insbesondere Heizöl (20') oder einem anderen flüssigen Brennstoff, unter Verwendung eines sauerstoffhaltigen Gases (5a, 5b, 21', 22'), das sich aus einem Inertanteil und einem aus Sauerstoff O₂ bestehenden Anteil zusammensetzt, folgende Schritte umfassend:
- Bildung eines Brennstoff/Gas-Gemisches durch Dispergieren des Brennstoffs in einen Strahl des sauerstoffhaltigen Gases (21');
- zusätzlich ein Zumischen von Gas eines Rückführstroms (3b) und Verdampfung des dispergierten Brennstoffs;
- Erzeugung von Synthesegas aus dem Gasgemisch mittels partieller Oxidation sowie Reformierungsprozessen durch heterogene Katalyse;
- Verzweigung des erzeugten Synthesegases in einen Produktstrom (3a) und den Rückführstrom (3b) für eine Rezirkulation; und
- eine geregelte Entnahme (6) von Wärme aus dem Rückführstrom zur Einstellung einer vorgegebenen Temperatur eines Katalysatorträgers (10), auf dem die heterogene Katalyse stattfindet.

2. Verfahren nach Anspruch 1, **dadurch gekennzeichnet, dass** der Katalysatorträger (10) eine geordnete Packung ist oder sich aus Schüttkörpern mit hoher spezifischer Oberfläche aufbaut und dass das Brennstoff/Gas-Gemisch mit einer Zweistoffdüse (2) erzeugt wird, die so ausgebildet und angeordnet ist, dass ein Unterdruck an der Spitze der Düse (23) und ein aus diesem resultierendes Druckgefälle sich ausbildet, das zumindest teilweise als treibende Kraft für den Rückführstrom (3b) genutzt wird, wobei die Packung im Hinblick auf die Rezirkulation eine Struktur aufweist, die einen möglichst geringen Strömungswiderstand erzeugt, nämlich beispielsweise eine Wabenstruktur mit parallelen Strömungskanälen, eine Struktur mit wellenförmigen Folien und sich kreuzenden Strömungskanälen, eine retikulare Schaumstruktur oder eine Struktur eines dreidimensionalen Geflechts.

3. Verfahren nach Anspruch 1 oder 2, **dadurch gekennzeichnet, dass** deionisiertes Wasser (80) in den Rückführstrom (3b) eingesprüht wird, um dieses eingespeiste Wasser als Reaktionskomponente der Reformierungsprozesse und für eine Kühlung des rückgeführten Synthesegases zu nutzen.

4. Verfahren nach einem der Ansprüche 1 bis 3, **dadurch gekennzeichnet, dass** das sauerstoffhaltige Gas (5a, 5b) mittels einer Pumpe (4) und über mindestens zwei Gasströme (21', 22') in das Verfahren eingespeist wird, dass der erste Gasstrom (21') direkt beim Dispergieren, insbesondere einem Versprühen des Heizöls (20') eingesetzt wird und dass der zweite Gasstrom (22') durch mindestens eine Treibdüse (13, 71) in den Rückführstrom (3b) eingespeist wird.

5. Verfahren nach einem der Ansprüche 1 bis 4, **dadurch gekennzeichnet, dass** als sauerstoffhaltiges Gas (21', 22') Umgebungsluft (5a) und/oder Abgas (5b) aus einer Nachverbrennung (94) einer Brennstoffzellenbatterie (9') verwendet wird.

6. Einrichtung (1) zum Durchführen des Verfahrens gemäss einem der Ansprüche 1 bis 5, **dadurch gekennzeichnet, dass** ein Katalysator (10), der aus einer keramischen oder metallischen Trägerstruktur und einer auf dieser aufgebrachten katalytisch wirksamen Substanz besteht, sich in einem ersten zylindrischen Rohr (11) befindet und eine Zweistoffdüse (2) für die Erzeugung des Heizöl/Gas-Gemisches (20', 21', 22') in einem Abstand von einer Eintrittsfläche (100) des Katalysators angeordnet ist, wobei der Abstand ausreichend gross ist, so dass sich für die Verdampfung des Heizöls (20') eine genügend lange Verweilzeit vor dem Eintritt ergibt und das Gemisch über die ganze Eintrittsfläche verteilt in den Katalysator eintritt.

7. Einrichtung nach Anspruch 6, **dadurch gekennzeichnet, dass** der Rückführstrom (3b) durch einen Ringraum zwischen dem ersten (11) und einem zweiten zylindrischen Rohr (12) geführt ist.

8. Einrichtung nach Anspruch 6, **dadurch gekennzeichnet, dass** für den Rückführstrom (3b) ein zweites Rohr (7) besteht, das ausserhalb des ersten Rohrs (11) angeordnet ist, wobei das zweite Rohr als Strahlverdichter (71, 72, 73) ausgebildet sein kann und ein Teil (22') des sauerstoffhaltigen Gases als Treibmedium genutzt wird.

9. Einrichtung nach einem der Ansprüche 1 bis 4, **dadurch gekennzeichnet, dass** die Zweistoffdüse (2) eine Kombination aus einer zentralen Düse für den Brennstoff (20') und einer Ringdüse für das sauerstoffhaltige Gas (21') ist, wobei in der zentralen Düse eine Heizpatrone (25) zum Vorwärmen oder Verdampfen des Heizöls integriert sein kann.

10. Anlage (9) mit einer Batterie (9') von Hochtemperatur-Brennstoffzellen (90) und einer Einrichtung (1) gemäss einem der Ansprüche 6 bis 9, **dadurch gekennzeichnet, dass** die Einrichtung und die Batterie durch eine Leitung (29) für den Produktstrom (3a) der Einrichtung verbunden sind und dass Wasserstoff und Kohlenmonoxid des Produktstroms als reduzierende Reaktanden von elektrochemischen Prozessen zur Erzeugung von elektrischer Energie genutzt werden.
